# EUROPEAN PATENT APPLICATION

(11) **EP 4 825 471 A1**
(43) Date of publication of application: **21.10.2026**
(21) Application number: 25170424.3
(22) Date of filing: 14.04.2025
(51) Int. Cl.: B01D 53/34, B01D 53/62

(54) **METHOD FOR INTEGRATING WASTE-TO-ENERGY AND CARBON CAPTURE PROCESSES**

(71) Applicant: Keppel Seghers Belgium NV, 2830 Willebroek (BE)
(72) Inventor: Shafiei, Marzieh, 2830 Willebroek (BE); Croymans, Tom, 2830 Willebroek (BE); Pittoors, Rudolf, 2830 Willebroek (BE)
(74) Representative: Brantsandpatents bv

(57) **Abstract**

The present invention relates a method for integrating a Waste-to-Energy (WtE) process with a Carbon Capture (CC) process, comprising the steps of incinerating waste with heated combustion air to obtain a flue gas, generating high-pressure steam from heated feedwater with said flue gas in a boiler, feeding said high-pressure steam to an energy turbine, extracting one or more steam fractions from said energy turbine, and feeding said one or more steam fractions to one or more main air preheaters, wherein said main air preheaters are for at least partially heating said combustion air, wherein a CC condensate is used to preheat said combustion air in an additional air preheater positioned prior to said one or more main air preheaters so that said combustion air is first preheated in said additional air preheater and is subsequently guided to the one or more main air preheaters.

## Description

### TECHNICAL FIELD

The invention relates to a method for integrating Waste-to-Energy (WtE) process and a carbon capture process, and an integrated system thereto.

### STATE OF THE ART

Carbon capture (CC) will be necessary and is the one of the only options for decarbonization of the waste to energy (WtE) sector. However, the steam requirement of post combustion CC process significantly affects the WtE efficiency. To reduce the CC energy requirements several technologies are used including but not limited to organic and inorganic compounds. Furthermore, application of heat integration within CC process results in less steam consumption and subsequently improved WtE power output when coupled with a CC.

For instance, WO2016123386 proposed a solution by flashing the lean solvent in the carbon capture process and sending back the produced steam to the desorber column via a compressor (Lean vapor compression). Despite all these efforts, still CC process is a significant consumer of the WtE steam and/or power. Therefore, it is logical to use any source of heat available in the WtE and CC system for further heat integration to increase the energy performance of the overall system. Since flue gas from WtE should be cooled before entering CC process, heat from flue gas is an attractive source of energy for heat integration. However, the following problems arise inherent in the integration of a power plant with a carbon capture system utilizing this waste heat recovery. One significant challenge is that flue gas, especially in a WtE process, is highly corrosive, leading to high equipment costs, particularly in the waste-to-energy sector. Although flue gas should be cooled before entering CC process, The destination of this heat can be either CC process (e.g., US patent No. US9157369) or WtE. Integrating heat from flue gas into the system can result in uneven temperature distribution, insufficient heat recovery, and higher operational costs.

In US Patent No. 9 157 369, combustion air enters at ambient temperature, limiting combustion efficiency.

There are technical shortcomings, including complexity in integrating multiple heat sources, high equipment costs due to corrosive flue gas, challenges with heat integration and steam flow rate control, highlight the inherent challenges in achieving an efficient, cost-effective, and fully integrated process.

The present invention aims to provide a method and system that addresses and solves the problems mentioned above, offering an efficient, cost-effective, and integrated solution.

### SUMMARY OF THE INVENTION

In a first aspect, the present invention provides a method for integrating a Waste-to-Energy (WtE) process with a Carbon Capture (CC) process, as defined in claim 1. The method effectively integrates WtE and CC processes to optimize waste heat recovery and minimize energy losses. The recovery of energy from carbon-capturing media and the preheating of combustion air significantly improves system efficiency, reducing energy consumption and operational costs. Preferred embodiments of this method are defined in claims 2 to 9.

In a second aspect, the present invention provides a system as defined in claim 10. The system efficiently integrates WtE and CC systems. Preferred embodiments of the system are defined in claims 10 to 15.

Current state of the art in carbon capture (CC) for the Waste-to-Energy (WtE) sector presents significant challenges. CC is seen as the one of the only viable solutions for decarbonizing the WtE sector, but it is highly energy-intensive, requiring steam at 4-5 bar(a) (>140°C). This steam is often condensed in the desorber reboiler, supplying heat to the CC process. However, due to temperature limitations, not all of the heat from the steam condensate can be recovered, leading to efficiency losses. The returning condensate typically has a temperature ranging from 105 to 150°C, with lower temperatures corresponding to CC technologies that recover more energy internally. In conventional setups, the condensate remains too warm, necessitating dissipation of excess heat into the air to meet the WtE system requirements. This results in unutilized energy potential and overall inefficiency. Additionally, the high temperature of the condensate must not exceed the maximum allowable limits within the WtE system, necessitating additional cooling efforts.

However, in the current invention maximum useful energy is recovered, which is otherwise dissipated to air by cooling towers in normal operations. The CC condensate returns to the WtE installation. Heat recovery from CC condensate reduces the LP steam requirement for air preheater and thus reduces the parasitic load of the WtE process, which is equivalent to more power production by turbine, meaning via this concept the overall system (WtE with CC) becomes much more energy efficient.

### DETAILED DESCRIPTION OF THE INVENTION

The invention relates to a method for integrating a Waste-to-Energy process and a Carbon Capture process.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention. The terms or definitions used herein are provided solely to aid in the understanding of the invention.

As used herein, the following terms have the following meanings:
The term "Waste-to-Energy (WtE) process" refers to a method for converting waste materials into usable energy, typically through incineration to produce heat, electricity, or fuel. During incineration, waste is combusted at elevated temperatures, thereby generating thermal energy that is subsequently utilized to produce steam. This steam is employed to power a turbine, which, in turn, generates electricity.

The term "Carbon Capture (CC) process" encompasses the procedure of capturing carbon dioxide emissions from industrial sources to prevent their release into the atmosphere, typically for sequestration or subsequent utilization. Examples of CC processes are absorption-based CC processes, adsorption based CC processes, membrane-based CC processes, and cryogenic-based CC processes.

The term "Carbon Capture (CC) condensate" refers to the (semi-)liquid formed during the cooling and condensation of steam in a carbon capture process, typically after exchanging heat in the CC process to regenerate carbon dioxide.

The term "Incinerator" refers to a furnace used in the Waste-to-Energy process to combust waste and generate hot flue gas for energy production.

The term "Boiler" refers to a vessel used in the Waste-to-Energy process to generate high-pressure steam by heating feedwater with energy from the hot flue gas.

The term "Energy Turbine" refers to a device that converts thermal energy, such as high-pressure steam, into mechanical energy for the generation of electricity. In addition to generating electricity, high-pressure steam may be used for cogeneration, where both electrical power and useful thermal energy are produced. Alternatively, thermal energy may be redirected for district heating or industrial processes, thereby providing a flexible approach to the utilization of power and heat.

The term "Main Air Preheaters" refers to devices used to preheat combustion air using recovered steam fractions, thereby improving the efficiency of the Waste-to-Energy process.

The term "Tie-in Point" refers to a connection within the system where two or more fluid streams are combined or redirected. Tie-in points are commonly used to mix condensates or regulate flow between different parts of the process.

The term "Deaerator" refers to a device designed to remove dissolved gases, particularly oxygen and carbon dioxide, from a condensate, such as the CC-WtE condensate. This is beneficial to prevent corrosion and enhance the efficiency of feedwater used in the boiler system.

The term "Flue Gas Cooler" refers to a device used to recover heat from flue gases produced during the waste incineration process. During combustion, high-temperature exhaust gases are generated, containing various substances, including carbon dioxide, water vapour, and other byproducts. The flue gas cooler can recover heat from these flue gases, thereby enhancing the energy efficiency of the Waste-to-Energy process. Cooling the flue gases is beneficial to recover useful energy while also reducing the temperature of the gases before potential atmospheric release. A reduction in temperature can also aid in decreasing the formation of harmful compounds and enhance the efficiency of subsequent gas treatment processes, such as carbon capture.

The term "Flash Drum" refers to a vessel used to recover thermal energy from a condensate by reducing its pressure, which results in partial vaporization and the release of latent heat. In an embodiment, the condensate is introduced into the flash drum at a higher pressure. When the pressure is reduced, part of the liquid undergoes rapid evaporation, which absorbs heat from the remaining liquid, effectively reducing its temperature. The vapor (steam) thus generated may be used for additional heating purposes, while the cooled liquid is collected and utilized elsewhere in the system, thereby improving overall energy efficiency.

The term "Low-Low-Pressure Steam" refers to steam of near atmospheric pressure generated during the energy recovery process in a Waste-to-Energy system. It represents the last fraction of steam extracted from the energy turbine. Such steam is typically utilized for secondary heating applications, such as in low-low-pressure heat exchangers where its residual thermal energy can be transferred to another process stream. Although the "Low-Low-Pressure Steam" is not suitable for high-energy applications, it remains valuable for preheating or other low-temperature applications, maximizing overall system energy efficiency.

The term "High-Pressure Steam" refers to steam generated at a pressure of > 40 bar(a), primarily used to drive an energy turbine for power generation in the Waste-to-Energy process. This is the first fraction of steam extracted from the energy turbine.

The term "Medium-Pressure Steam" refers to steam extracted from the energy turbine following the utilization of high-pressure steam for initial power generation. It is the first fraction released from the turbine after high-pressure steam at a pressure between 6 and 40 bar(a) and is employed for processes requiring moderate thermal energy, such as heating air or other fluids in subsequent stages of the system.

The term "Low-Pressure Steam" refers to steam extracted from the turbine after medium-pressure steam. It is the second fraction released from the turbine at a pressure between 3 and 10 bar, or even between 3 and 6 bar(a), and is utilized for lower-energy applications within the Waste-to-Energy system, such as heating in air preheaters or flue gas coolers, thereby maximizing energy utilization. The definitions of pressure for steam types may vary in different industries and even different WtE processes, but the order of extraction from turbine always starts from medium pressure, low pressure and low-low pressure. Steam extraction is done either via a pressure-controlled extraction or an uncontrolled extraction, i.e. a bleed. It needs to be understood that if multiple fractions are extracted from the turbine, Medium-Pressure Steam will be of a higher pressure than Low-Pressure Steam, which will be of a higher pressure than Low-Low-Pressure Steam. The difference in pressure between the fractions will always be at least 1 bar, or even at least 5 bar.

The term "Turbine exhaust" refers to the vapor that exits the energy turbine at the last stage and at lowest pressure. The turbine exhaust may or may not contain liquid water depending on the turbine type.

The term "WtE Condensate" refers to the stream produced after WtE condenser. The said Turbine exhaust is fully condensed in the WtE condenser and thus WtE condensate contains 100% liquid.

The term "WtE Condenser" refers to a condenser that forms part of the Waste-to-Energy apparatus, used for condensing steam or vapor from the energy turbine back into liquid form. This condensation process facilitates water recovery for reuse and contributes to improving overall energy efficiency.

The term "Combustion Air" refers to the air used to support the combustion of waste in the incinerator.

The term "Preheater" refers to a device employed to preheat a gas, such as combustion air, before it enters a process, thereby increasing overall system efficiency and reducing fuel consumption.

The term "Flash Steam" refers to the vapor produced from flashing the CC condensate to a lower pressure of range of 0.2 - 1 bar(a). This "Flash steam" is diverted to a tie-in point to the turbine exhaust before WtE condenser.

The term "cooled CC condensate" refers to the refers to the liquid condensate produced from using the CC condensate in the additional air preheater. This "cooled CC condensate" is diverted to a tie-in point to the WtE condensate after WtE condenser.

The term "Ejector Steam" refers to the steam exiting the ejector. The ejector is an equipment used to provide vacuum pressure in the WtE condenser. The inlet streams of ejector are high pressure steam and non-condensable gases (air) from the WtE condenser. The exit steam, so called "Ejector steam" is a low-pressure steam mixed with very low amount of air.

"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specify the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The present invention relates to a method for integrating Waste-to-Energy (WtE) and Carbon Capture (CC) processes, which aims to enhance the efficiency of energy generation from waste materials, while concurrently minimizing the environmental impact of such processes. The invention discloses an improved method for energy recovery and carbon dioxide capture, optimizing the production of electricity and other forms of useful thermal energy, and thereby reducing greenhouse gas emissions.

In an embodiment, said WtE process comprises an incinerator, a boiler and one or more energy turbines for power generation. Preferably, the method comprises the steps of:
∘ incinerating waste with heated combustion air to obtain a flue gas,
∘ generating high-pressure steam from heated feedwater with said flue gas in said boiler, and
∘ feeding said high-pressure steam to said one or more energy turbines.

In a preferred embodiment, the method further comprises the steps of:
∘ extracting one or more steam fractions from said one or more energy turbines, said one or more steam fractions being chosen from medium-pressure, low-pressure, low-low-pressure steam and turbine exhaust, and
∘ feeding said one or more steam fractions to one or more main air preheaters, wherein said main air preheaters are for at least partially heating said combustion air.

In a particularly preferred embodiment, the method further comprises the steps of:
o feeding one or more of said steam fractions to a CC process, wherein said one or more steam fractions is condensed in the CC process to a CC condensate,
wherein said CC condensate is used to preheat said combustion air in an additional air preheater positioned prior to said one or more main air preheaters so that said combustion air is first preheated in said additional air preheater and is subsequently guided to the one or more main air preheaters.

In a further embodiment, the method provides for the sequential heating of combustion air through a combination of one or more main air preheaters powered by steam fractions at various pressure levels and an additional air preheater powered by a CC condensate. By using heat from both the WtE and CC processes, the combustion air is preheated efficiently, resulting in improved combustion performance and reduced energy consumption.

In an embodiment, the one or more turbines generate steam fractions at various pressure levels, including medium-pressure, low-pressure, and low-low-pressure. Each fraction can be used for heating and regeneration, maximizing energy efficiency. The expansion of steam at the turbine ends produces a turbine exhaust, which can also be collected and used for heat recovery. The residual thermal energy in turbine exhaust is valuable for auxiliary heating, reducing energy consumption and improving efficiency. High-pressure steam is used for power generation, while lower-pressure steam supports processes like air preheating and solvent regeneration, optimizing energy usage.

The one or more turbines could for example comprise a condensing turbine and/or a backpressure turbine. In an embodiment, the method comprises one or two turbines, of which at least one is a condensing turbine.

In an embodiment, said combustion air is heated sequentially, after said additional air preheater. In another or a further embodiment, said heating is carried out by passing one or more main air preheaters, preferably two or more, three or more. Preferably chosen from a low-pressure main air preheater, then a medium-pressure main air preheater, and optionally a high-pressure main air preheater. The high-pressure main air preheater is mostly only used in case of a turbine trip.

In another or a further embodiment, said heating is carried out by passing in series through said additional air preheater, a low-pressure main air preheater, a medium-pressure main air preheater, and optionally a high-pressure main air preheater, wherein all main air preheaters are heated by a steam fraction. Sequential heating reduces parasitic energy use and improves system efficiency by optimizing waste heat utilization and lowering steam demand.

Herein, in a high-pressure main air preheater the combustion air is heated with high-pressure steam, in a medium-pressure main air preheater combustion air is heated with medium-pressure steam, and so on.

In an embodiment, the temperature of the combustion air at the outlet of the additional air preheater is between 5 and 20°C, preferably between 5 and 15°C, or more preferably between 8 and 12°C, lower than the temperature of the CC condensate at the inlet of the additional air preheater.

In an embodiment, one or more of said steam fractions extracted from said one or more turbines are fed to the CC process where it acts as a heat source. The steam is thereby condensed to a CC condensate, such as for example in a desorber-reboiler. Preferably a medium-pressure steam fraction or a low-pressure steam fraction is fed to the CC process. Preferably, the steam fraction is provided to a regeneration unit in the CC process, where heat from steam results in releasing the captured CO₂ and regenerating the capturing medium (solvent, membrane, ...) for reuse.

The CC process can be any process chosen from absorption-based CC processes, adsorption based CC processes, membrane-based CC processes, and cryogenic-based CC processes. In all processes CO₂ is captured by a capturing medium. The capturing medium can be a solvent, a porous material, a membrane, cryogenic packed bed, etc.

Absorption-based processes may involve amine-based solvents, wherein CO₂ is chemically bound by amines. Another example includes the use of carbonates such as potassium carbonate (K₂CO₃) or sodium carbonate (Na₂CO₃), which bind CO₂ through chemical reactions. Chilled ammonia can also be used, where CO₂ is absorbed in an ammonia solution at low temperatures to enhance efficiency. Physical solvents, such as methanol, are employed to physically absorb CO₂ without chemical reactions. Additionally, ionic liquids represent an innovative approach, capable of capturing CO₂ through specific interactions.

Adsorption-based processes include the use of zeolites, which are microporous materials that physically adsorb CO₂ through their porous structure. Metal-Organic Frameworks (MOFs) provide another option, offering materials with a high surface area specifically designed to efficiently adsorb CO₂.

Membrane-based processes can include non-facilitated or facilitated membranes, which separate CO₂ based on permeability or chemical interactions. Mixed matrix membranes, combining organic and inorganic materials, offer improved separation efficiency. Gas-contactor membranes optimize the interaction between CO₂ and the gas stream to enhance the capture process.

Cryogenic-based processes include the use of cryogenic packed beds, where CO₂ is condensed and captured at low temperatures. An external cooling loop cryogenic carbon capture process can also be applied, utilizing an external cooling system to freeze and capture CO₂. Another technique involves anti-sublimation, where CO₂ transitions directly from a gas phase to a solid phase without passing through a liquid phase.

For example, in an embodiment, the CC process can comprise the use of a CC solvent for absorbing CO₂ from a CO2-containing source, such as flue gas, followed by a regeneration system wherein steam is employed to release the captured CO₂, thereby producing a CC condensate. In this example, the flue gas can be directed from the boiler to the carbon capture (CC) system. In the CC system, flue gas contacts a carbon capture solvent in an absorber column, where carbon dioxide is absorbed. In a further embodiment, after absorption, the CO₂ and the solvent is then transferred to a regeneration unit, where heat from steam results in releasing the captured CO₂ and regenerating the solvent for reuse. Typical CC solvents include amine-based compounds like MEA or MDEA.

In an exemplary embodiment, the method comprises the steps of:
- directing the flue gas to an absorber in the CC system, wherein a capturing medium is used to capture carbon dioxide from said flue gas,
- regenerating said CO₂ rich capturing medium by heating said CO₂-rich capturing medium in a regeneration unit, wherein steam is used to heat said capturing medium to release the CO2, and wherein said steam is condensed in said regeneration unit thereby obtaining the CC condensate.

The regeneration unit can for example comprise a desorber or desorber-reboiler.

Within the CC process, the regeneration unit is often the only equipment that requires heat. However, after condensation of the steam, not all the heat from steam condensate is recoverable in the CC process due to temperature limitations. As the energy cannot be used in the CC process in an (economic) attractive way, the present method is described here to enable maximal usage of the condensate energy. By application of this new design the steam extraction for the WtE operation is reduced which results in better efficiency of the WtE.

The CC condensate returns to the WtE system. The preferred maximum allowable condensate temperature entering the deaerator depends on the deaerator operating pressure. This temperature is about 15-25°C less than the saturation temperature of the water at deaerator operating pressure. Thus, the CC condensate is advantageously cooled before being mixed with the WtE condensate.

In an embodiment, the CC condensate has a temperature between 75°C and 200°C at the inlet of the additional air preheater. Preferably between 80°C and 190°C, between 90°C and 180°C, between 100°C and 170°C, or between 105°C and 150°C. Even more preferably, the temperature is maintained between 110°C and 145°C making it an effective heat source for preheating purposes. Recovering heat from the CC condensate offsets significant energy demands, enhancing overall efficiency. Furthermore, this cooling of the CC condensate is important to make sure that the CC condensate's high temperature does not exceed the maximum allowable temperatures in the WtE. In a conventional setup the condensate would be too warm, and the excess heat will be dissipated to air in order to meet the WtE design requirements.

In a particular embodiment, the method for integrating a Waste-to-Energy (WtE) process with a Carbon Capture (CC) process, comprises the steps of:
- incinerating waste with heated combustion air to obtain a flue gas,
- generating high-pressure steam from heated feedwater with said flue gas in said boiler,
- feeding said high-pressure steam to said one or more energy turbines,
- extracting at least two steam fractions from said energy turbine, said at least two steam fractions being chosen from medium-pressure steam, low-pressure steam, low-low-pressure steam and turbine exhaust,
- feeding at least one steam fraction to at least one main air preheaters, wherein said at least one main air preheater is for at least partially heating said combustion air,
- directing at least part of said flue gas to a capturing unit of the CC process, wherein a capturing medium is used to capture carbon dioxide from said flue gas, and
- regenerating said capturing medium by heating said capturing medium in a regeneration unit of the CC process to release said carbon dioxide, wherein at least one of said one or more steam fractions is used to heat said capturing medium, and wherein at least part of said steam fraction is condensed in said regeneration unit thereby obtaining the CC condensate,
wherein said CC condensate is used to preheat said combustion air in an additional preheater positioned prior to said at least three main air preheaters so that said combustion air is first preheated in said additional air preheater and is subsequently guided to the at least three main air preheaters.

In an embodiment, the cooler CC condensate that leaves the additional air preheater is mixed with said WtE condensate at a tie-in point, thereby obtaining a CC-WtE condensate. In a further embodiment said tie-in point is equipped with a temperature sensor to monitor the temperature of a CC-WtE condensate. Because of the cooling in the additional air preheater, the two condensates can be mixed without issues. The temperature sensor ensures optimal process control through real-time monitoring, maintaining condensate temperature for efficient heat recovery and preventing overheating.

In a further embodiment, the method comprises a deaerator configured to remove dissolved gases from the CC-WtE condensate, optionally forming a heated feedwater stream to be directed to the boiler. In an embodiment, the deaerator is heated by a low-pressure steam fraction from the energy turbine. Temperature control in the deaerator ensures efficient gas removal without thermal stress, improving process stability and steam quality, while maintaining optimal efficiency.

In an embodiment, residual heat from the flue gases is recovered using a flue gas cooler, which is integrated into the WtE process. The flue gas cooler, positioned upstream of the deaerator, captures heat from flue gases to improve energy efficiency by preheating the CC-WtE condensate. Furthermore, cooling flue gases aids pollutant removal, reduces corrosion, and lowers cooling system loads, making pollutant capture and equipment operation more efficient and cost-effective.

In an embodiment, the method further comprises the step of providing the cooler CC condensate from the additional air preheater to a flash drum, thereby obtaining a low-pressure flash steam and an even cooler CC condensate. Preferably, the flash steam from said flash drum is fed to said WtE condenser.

In this embodiment, the method includes the use of flash drum to produce low-pressure flash steam and cooled CC condensate from the CC condensate. The flash steam from the flash drum is directed to a WtE condenser, which maintains vacuum pressure within the flash drum.

The steam production in the flash drum requires energy which is provided from the CC condensate itself. As a result, the CC condensate temperature is reduced, typically to the saturation temperature of water at the (flash drum) vacuum pressure.

In a further embodiment, the even cooler CC condensate that leaves the flash drum is mixed with the WtE condensate downstream of the WtE condenser, to obtain the CC-WtE condensate. In an embodiment, the mixing happens at a tie-in point somewhere downstream of the WtE condenser. In a further embodiment said tie-in point is equipped with a temperature sensor to monitor the temperature of a CC-WtE condensate. Because of the cooling in the additional air preheater, the two condensates can be mixed without issues. The temperature sensor ensures optimal process control through real-time monitoring, maintaining condensate temperature for efficient heat recovery and preventing overheating.

In a second aspect, the invention relates to an integrated system. In an embodiment, the integrated system comprises WtE system and a CC system.

In another or a further embodiment the integrated system comprises:
o an incinerator for incinerating waste, said incinerator comprising a combustion air inlet and a flue gas outlet;
o a boiler comprising a flue gas inlet fluidly connected to said flue gas outlet of said incinerator, a feedwater inlet, and a high-pressure steam outlet;
∘ one or more energy turbines configured to convert high-pressure steam into energy comprising a high pressure steam inlet fluidly connected to said high-pressure steam outlet of said boiler, wherein said one or more energy turbines further have one or more steam outlets chosen from a medium-pressure steam outlet, a low-pressure steam outlet, a low-low-pressure steam outlet, and a turbine exhaust outlet; and
∘ an additional air preheater configured for preheating said stream of combustion air, wherein said additional air preheater comprises a condensate inlet fluidly connected to a condensate outlet of a carbon-capturing (CC) system.

In a further embodiment the integrated system comprises further:
∘ one or more main air preheaters configured to heat a stream of combustion air in series with said one or more steam fractions, wherein the one or more main air preheaters each comprise a steam inlet fluidly connected to said one or more steam outlets of said energy turbine or the high-pressure steam outlet of the boiler, wherein said additional air preheater is positioned in series upstream of said one or more main air preheaters.

In a particular embodiment the integrated system comprises:
o an incinerator for incinerating waste, said incinerator comprising a combustion air inlet and a flue gas outlet;
o a boiler comprising a flue gas inlet fluidly connected to said flue gas outlet of said incinerator, a feedwater inlet, and a high-pressure steam outlet;
∘ one or more energy turbines configured to convert high-pressure steam into energy comprising a high pressure steam inlet fluidly connected to said high-pressure steam outlet of said boiler, wherein said one or more energy turbines further have one or more steam outlets chosen from a medium-pressure steam outlet, a low-pressure steam outlet, a low-low-pressure steam outlet, and a turbine exhaust outlet;
∘ one or more main air preheaters configured to heat a stream of combustion air in series with said one or more steam fractions, wherein the one or more main air preheaters each comprise a steam inlet fluidly connected to said one or more steam outlets of said energy turbine or to the high-pressure steam outlet of the boiler;
∘ an additional air preheater configured for preheating said stream of combustion air, wherein said additional air preheater is positioned in series upstream of said one or more main air preheaters, and wherein said additional air preheater comprises a condensate inlet fluidly connected to a condensate outlet of a CC system.

In an embodiment the one or more main air preheaters are chosen from a high-pressure, a medium-pressure, and a low-pressure, main air preheater.

In an embodiment, the integrated system comprises two or more main air preheaters chosen from a high-pressure, a medium-pressure, and a low-pressure main air preheater, preferably three or more main air preheaters chosen from a high-pressure, a medium-pressure, and a low-pressure air preheater.

In a particular embodiment, the integrated system comprises a medium-pressure main air preheater, and a low-pressure main air preheater, wherein the main air preheaters are arranged such that said combustion air passes through said additional air preheater, said low-pressure main air preheater, and said medium-pressure main air preheater in series. Using multiple main air preheaters allows for efficient, controlled energy transfer, reducing thermal shock to incinerator components and extending their lifespan. Sequential heating utilizes steam at different pressure levels, improving thermal efficiency, minimizing energy waste, and reducing fuel consumption.

The additional air preheater, positioned upstream the sequential main air preheaters, uses condensate from the carbon capture system to further improve efficiency and lower emissions.

Preferably, each main air preheater comprises a steam inlet that is fluidly connected to one or more of the steam outlets of the boiler or turbine. Herein, a high-pressure main air preheater has a steam inlet that is fluidly connected to the high-pressure steam outlet of the boiler, a medium-pressure main air preheater has a steam inlet that is fluidly connected to a medium-pressure steam outlet of the turbine, a low-pressure main air preheater has a steam inlet that is fluidly connected to a low-pressure steam outlet of the turbine, and so on.

In a further embodiment, the additional air preheater and main air preheaters are tube bundle heat exchangers. Tube bundles increase the heat exchange surface area, enhancing heat transfer efficiency and optimizing energy recovery. They ensure effective preheating, reduce pressure drops, and maintain uniform heating, and contributing to system reliability and extended component lifespan.

In an embodiment, the one or more turbines are thus provided with one or more, preferably two or more, even more preferably three or more steam outlets, chosen from medium-pressure, low-pressure, low-low-pressure steam outlets and a turbine exhaust outlet. In a particular embodiment, the one or more turbines have a medium-pressure steam outlet, a low pressure steam outlet, optionally a low-low-pressure steam outlet, and a turbine exhaust outlet. The turbine exhaust outlet is configured to collect the lowest pressure steam. High-pressure steam is available directly from boiler or steam header.

In an embodiment, the integrated system further comprises a WtE condenser. In a further embodiment, the WtE condenser is fluidly connected to the turbine exhaust outlet of the energy turbine. The condenser is configured to condense WtE expanded vapor coming from the energy turbine. The condenser converts turbine steam back into liquid, facilitating reuse and maintaining a closed-loop cycle.

In an embodiment, the integrated system further comprises a steam ejector fluidly connected to the high-pressure steam outlet of the boiler and fluidly connected to the WtE condenser. The ejector receives high-pressure steam as inlet motive force and sucks trapped air in the WtE condenser. Thus, it maintains a vacuum pressure in the WtE condenser. In an embodiment, the ejector is fluidly connected to an ejector heat exchanger and delivers the steam mixed with small amounts of air as heat source to it. The steam at this point has a near atmospheric pressure. In another or further embodiment, said ejector heat exchanger has a condensate inlet fluidly connected to the condensate outlet of the WtE condenser to receive the WtE condensate as heat sink.

In an embodiment, the WtE condenser is fluidly connected to the turbine exhaust outlet of at least one energy turbine. The ejector heat exchanger comprises a condensate inlet fluidly connected to a condensate outlet of the WtE condenser and an ejector steam inlet fluidly connected to an ejector steam outlet of the ejector. The preheating process raises the condensate temperature, enhancing the system's thermal efficiency.

In an embodiment, the integrated system comprises a low-low-pressure heat exchanger downstream of the ejector heat exchanger. However, due to the use of a CC condensate and its sufficiently high residual heat after the additional air preheater, there is no need any more for a subsequently low-low-pressure heat exchanger fueled by a low-low-pressure steam fraction from the energy turbine. Thus the flow of low-low-pressure steam can be stopped, this can be done with the control valve. The flow of WtE condensate can then be bypassed around the low-low-pressure heat exchanger. This significantly reduces the parasitic load of the turbine, since less steam needs to be extracted, and more steam can be used for power generation.

In an embodiment, a tie-in point is provided downstream of the ejector heat exchanger wherein the condensate outlet of the ejector heat exchanger or, optionally the low-low-pressure heat exchanger, is fluidly connected with the condensate outlet of the additional air preheater. At this tie-in point, the WtE condensate is mixed with a CC condensate to form a CC-WtE condensate. This configuration efficiently integrates condensate streams, optimizing heat use from both sources. Mixing the condensates balances thermal properties, improves preheating, and enhances energy utilization, reducing the thermal load on downstream components and improving operational stability.

In an embodiment, the integrated system further comprises at least one deaerator, wherein said at least one deaerator comprises a condensate inlet fluidly connected to the tie-point, said deaerator being configured to remove air from the said CC-WtE condensate. The deaerator removes dissolved gases from the integrated system before it enters the boiler, improving heat transfer efficiency and reducing corrosion risk. This enhances thermal conductivity, extends boiler lifespan, and minimizes maintenance. By maintaining optimal pressure, the deaerator ensures a stable feedwater supply, boosting the overall efficiency and reliability of the Waste-to-Energy system.

In an embodiment, the integrated system comprises a flue gas cooler. In another or further embodiment, the flue gas cooler comprises a flue gas inlet fluidly connected to a flue gas outlet of the incinerator or boiler. This flue gas cooler is configured to recover heat from the hot flue gas generated during the incineration process. By cooling the flue gases, the cooler extracts residual thermal energy, which can then be repurposed for other stages within the system, such as preheating feedwater or combustion air. In an embodiment, the flue gas cooler is positioned between the tie-in point and the deaerator. The flue gas cooler optimizes energy recovery even more.

In an embodiment, the integrated system comprises a capturing unit configured to capture CO2 from a CO2-containing source, such as flue gas. In a further embodiment, the capturing unit comprises a flue gas inlet fluidly connected to the flue gas outlet of the boiler, and a capturing medium inlet and a capturing medium outlet.

In an embodiment, the integrated system comprises a regeneration unit. In a further embodiment, the regeneration unit comprises a capturing medium inlet to receive CO2 rich capturing medium, a steam inlet to receive steam as a heat source, and a condensate outlet to discharge formed CC condensate. The steam inlet may be in fluid connection with one or more of the steam outlets of the energy turbine, preferably a low-pressure steam outlet.

By way of example, in case of an absorption based CC process, the capturing unit may be an absorber and the regeneration may comprise a desorber-reboiler.

In a particular embodiment the integrated system comprises:
o an incinerator for incinerating waste, said incinerator comprising a combustion air inlet and a flue gas outlet;
o a boiler comprising a flue gas inlet fluidly connected to said flue gas outlet of said incinerator, a feedwater inlet, and a high-pressure steam outlet;
∘ one or more energy turbines configured to convert high-pressure steam into energy comprising a high pressure steam inlet fluidly connected to said high-pressure steam outlet of said boiler, wherein said one or more energy turbines further have one or more steam outlets chosen from a medium-pressure steam outlet, a low-pressure steam outlet, a low-low-pressure steam outlet, and a turbine exhaust outlet;
∘ one or more main air preheaters in series configured to heat a stream of combustion air with said one or more steam fractions, wherein the one or more main air preheaters each comprise a steam inlet fluidly connected to said one or more steam outlets of said energy turbine or the high-pressure steam outlet of the boiler;
∘ a capturing unit configured to capture CO2 from a CO2-containing source, the capturing unit comprising a flue gas inlet fluidly connected to a flue gas outlet of the boiler, a capturing medium inlet and a capturing medium outlet,
∘ a regeneration unit comprising a capturing medium inlet in fluid connection with the capturing medium outlet of the capturing unit, a steam inlet to receive steam as a heat source, and a condensate outlet to discharge formed CC condensate, optionally the steam inlet may be in fluid connection with one or more of the steam outlets of the energy turbine, preferably a low-pressure steam outlet, and
∘ an additional air preheater configured for preheating said stream of combustion air, wherein said additional air preheater is positioned in series upstream of said one or more main air preheaters, and wherein said additional air preheater comprises a condensate inlet fluidly connected to the condensate outlet of said regeneration unit.

In an embodiment, the integrated system comprises a tie-in point where the condensate outlet of said WtE condenser or said ejector heat exchanger is connected with a condensate outlet of said additional air preheater wherein said WtE condensate is mixed with a CC condensate, forming a CC-WtE condensate. In a further embodiment, a temperature measurement system is positioned after said tie-in point to monitor the temperature of said CC-WtE condensate. In a further embodiment, the system comprises one or more temperature control systems configured to control the temperature of CC-WtE condensate. Temperature sensors at the tie-in point of CC condensate and WtE condensate, enable real-time monitoring of the mixed condensate's temperature, ensuring that optimal heat recovery conditions are maintained. The temperature control is enabled via regulating the low-low pressure steam flow rate.

In an embodiment, the system integrates control mechanisms for managing heat recovery processes. Specifically, a control valve and temperature controller are employed to regulate the supply of low-low-pressure steam (LLP steam). This mechanism ensures that the heat from the CC condensate is optimally utilized, allowing LLP steam consumption to be reduced, or halted as needed, thereby minimizing energy losses. Furthermore, a dedicated control system prevents excessively hot condensate from entering the deaerator, which could otherwise compromise the deaeration process and reduce the quality of generated steam. These control systems contribute significantly to stabilizing the overall process, ensuring consistent operation, and maximizing energy efficiency.

In an embodiment, the integrated system further comprises:
∘ a WtE condenser comprising a steam inlet in fluid connection with said turbine exhaust outlet of the one or more energy turbines, and
∘ a flash drum comprising a condensate inlet fluidly connected to the condensate outlet of the additional air preheater, a condensate outlet, and a steam outlet fluidly connected to said steam inlet of the WtE condenser.

In this embodiment, the flash drum is positioned between the condensate outlet of the additional air preheater and the tie-in point.

The present invention will be now described in more details, referring to examples that are not limitative.

### EXAMPLES AND FIGURE DESCRIPTION

### Example 1

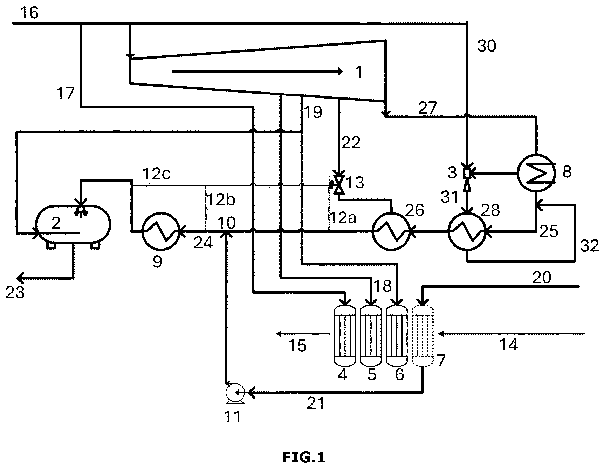

**Figure 1** shows an integrated system according to an embodiment of the invention.

High-pressure steam (16) from the boiler (not shown) is supplied to the energy turbine (1). The turbine exhaust (27) is directed to the WtE condenser (8), where it is further condensed to a WtE condensate (25). This WtE condensate (25) then flows through a heat exchanger (28), which is heated by ejector outlet steam (31). The ejector steam outlet (31) comes from an ejector (3) which is connected to WtE condenser (8) to provide a vacuum pressure in it. The ejector (3) receives a portion of high-pressure steam (30) steam from the boiler (not shown). The ejector (3) extracts any remaining non-condensable gasses (air) from the WtE condenser (8) and thus the final pressure of this steam is near atmospheric pressure. The remaining latent heat in the ejector steam (31) is recovered in a heat exchanger (28). The condensate (32) resulting from this ejector steam is sent back to a tie-in before the same heat exchanger (28) to be mixed with the WtE condensate (25).

Due to the high temperature of the CC condensate there is no need any more for a subsequently low-low-pressure heat exchanger (26) fueled by a low-low-pressure steam fraction (22) from the energy turbine (1). Thus the flow of low-low-pressure steam (22) can be stopped, this can be done with the control valve (13). The flow of WtE condensate (25) can be bypassed around the heat exchanger (26).

Ambient combustion air (14), which provides fresh air for the combustion process is heated utilizing a series of heaters in the following sequence: preheater (7), low-pressure main air preheater (6), medium-pressure main air preheater (5), and optionally a high-pressure main air preheater (4). The main air preheaters (4, 5, 6) respectively use high-pressure steam (17), medium-pressure steam (18), and low-pressure steam (19). The additional air preheater (7) receives a CC condensate (20) from a CC process (not shown), where it used to heat a stream of combustion air (14). After passing through the additional air preheater (7), the CC condensate (21) is mixed with the WtE condensate (25) at the tie-in point (10). At the tie-in point (10), the WtE condensate is mixed with the cooled CC condensate (21) of the additional air preheater (7). Following the tie-in point (10), the CC-WtE condensate mixture (24) passes through a flue gas cooler (9), where flue gases heat the mixture before it enters the deaerator (2). In the deaerator (2), dissolved gases are removed from the CC-WtE condensate (24), with a low-pressure steam fraction (19) from the energy turbine (1). Finally, the heated water (23) is directed via a supply line to the boiler.

Temperature controls (12a, 12b, 12c) and flow control valves (13) are strategically positioned throughout the system to regulate the temperature and flow rate of steam and condensate, thereby maintaining the conditions necessary for efficient system operation. These controls ensure that the process conditions are maintained at optimal levels for maximum efficiency and safety. Specifically, temperature control (12a) regulates the WtE condensate flow and manages how it extracts further heat from the low-low-pressure heat exchanger (26). Temperature control (12b) monitors and controls the WtE condensate temperature after the tie-in point (10), and thus regulates the addition of the CC condensate from the additional air preheater, while temperature control (12c) regulates the temperature after the flue gas cooler (9).

### Example 2

In this study, two configurations for carbon capture (CC) processes-Simple CC and Complex CC-were evaluated. The simple CC configuration refers to a CC system with limited heat/energy optimization within the CC system; for example, but not limited to, the application of one or more lean-rich solvent cross heat exchangers(s). The complex CC configuration refers to a CC system with a more elaborated heat/energy optimization within the CC system; for example, but not limited to, the application of lean vapor recompression units, application of rich solvent split, multiple heat exchangers optimizing heat/energy recovery within the absorber and/or desorber units. The analysis compared power consumption and cooling footprint for each of these setups.

All examples show a WtE-CC integration. In comparative examples 1 and 3, heat from the CC condensate is dissipated in the air by an air cooler. Meaning no energy is recovered. In examples 2 and 4, an additional preheater according to an embodiment of the invention is implemented resulting in (1) the heat from the CC condensate being used, which reduces the steam consumption within WtE process, and (2) the air coolers at the CC side are omitted, thus the power consumption and cooling footprint of the CC plant is also reduced. In the complex CC systems, heat flows within the CC are optimized leading to reduced power consumption by the CC process.

| | **Simple CC (1)** | **Simple CC + additional Air preheater** | **Complex CC (3)** | **Complex CC + additional Air preheater** |
|---|---|---|---|---|
| | | **(2)** | | **(4)** |
| CC power consumption (MWe)* | 15.7 | 15.7 | 18.2 | 18.2 |
| Power penalty of steam diversion to CC process (MWe) | 21.5 | 21.5 | 15.5 | 15.5 |
| Total CC power penalty (MWe) | 37.2 | 37.2 | 33.7 | 33.7 |
| WtE net increase as result of invention (MWe) | 0 | 3.1 | 0 | 1.3 |
| % change if compared to CC power consumption | 0.0% | 8.3% | 0.0% | 3.9% |
| WtE Net power production (MWe) | 64.8 | 67.9 | 68.3 | 69.6 |
| % in reduction in net WtE power due to CC process* | 36.5% | 33.4% | 33.0% | 31.8% |
| % improvement in WtE power production | 0% | 3.0% | 0% | 1.3% |
| Footprint of equipment for CC condensate cooling | 190 m² (Air cooler) | 150 m² (Air pre-heater) | 120 m² (Air cooler) | 50 m² (Air pre-heater) |

| | | | | |
|---|---|---|---|---|
| * Including power for compression, cooling and fan ** Including power penalty for steam, compression, cooling and fan | | | | |

## Claims

1. A method for integrating a Waste-to-Energy (WtE) process with a Carbon Capture (CC) process, said WtE process comprising an incinerator, a boiler and one or more energy turbines for power generation, wherein the method comprises the steps of:
∘ incinerating waste with heated combustion air to obtain a flue gas in said incinerator,
∘ generating high-pressure steam from heated feedwater with said flue gas in said boiler,
∘ feeding said high-pressure steam to said one or more energy turbines,
∘ extracting one or more steam fractions from said one or more energy turbines, said one or more steam fractions being chosen from medium-pressure steam, low-pressure steam, low-low-pressure steam, and turbine exhaust,
∘ feeding one or more of said steam fractions to one or more main air preheaters, wherein said main air preheaters are for at least partially heating said combustion air, and
∘ feeding one or more of said steam fractions to a CC process, wherein said one or more steam fractions are condensed in the CC process to a CC condensate,
wherein said CC condensate is used to preheat said combustion air in an additional air preheater positioned prior to said one or more main air preheaters such that said combustion air is first preheated in said additional air preheater and is subsequently guided to the one or more main air preheaters.

2. The method according to claim 1, wherein, after said additional preheater, said combustion air is heated sequentially by passing first through a low-pressure main air preheater, then a medium-pressure main air preheater, wherein all main air preheaters are heated by a steam fraction.

3. The method according to claim 1 or 2, wherein the method comprises the steps of:
∘ directing at least part of said flue gas to the CC process, wherein a capturing medium is used to capture carbon dioxide from said flue gas, and
o regenerating said capturing medium by heating said capturing medium in a regeneration unit to release said carbon dioxide, wherein at least one of said one or more steam fractions is used to heat said capturing medium, and wherein at least part of said steam fraction is condensed in said regeneration unit thereby obtaining the CC condensate.

4. The method according to any one of the previous claims, wherein the CC process is chosen from absorption-based CC processes, adsorption based CC processes, membrane-based CC processes, and cryogenic-based CC processes.

5. The method according to any one of the previous claims, wherein said combustion air leaves the additional air preheater with a temperature that is between 5 and 20°C lower than the temperature of said CC condensate at the inlet of the additional air preheater.

6. The method according to any one of the previous claims, wherein said turbine exhaust is extracted from the turbine and condensed in a WtE condenser to a WtE condensate, and wherein the CC condensate that leaves the additional air preheater is mixed with said WtE condensate to obtain a CC-WtE condensate.

7. The method according claim 6, wherein heat is recovered from at least part of said flue gas in a flue gas cooler, wherein said flue gas cooler captures heat from flue gases to preheat the CC-WtE condensate.

8. The method according to claim 6 or 7, wherein the temperature of said CC-WtE condensate is measured, and the flow rate of extracted low-low pressure steam is controlled based on the temperature of CC-WtE condensate.

9. The method according to any one of the previous claims, wherein said CC condensate has a temperature between 105°C and 150°C at the inlet of the additional preheater.

10. An integrated system comprising:
o an incinerator for incinerating waste, said incinerator comprising a combustion air inlet and a flue gas outlet,
∘ a boiler comprising a flue gas inlet fluidly connected to said flue gas outlet of said incinerator, a feedwater inlet, and a high-pressure steam outlet;
∘ one or more energy turbines configured to convert high-pressure steam into energy comprising a high-pressure steam inlet fluidly connected to said high-pressure steam outlet of said boiler, wherein said one or more energy turbines further have one or more steam outlets chosen from a medium-pressure steam outlet, a low-pressure steam outlet, a low-low-pressure steam outlet, and a turbine exhaust outlet;
∘ one or more main air preheaters configured to heat a stream of combustion air in series with said one or more steam fractions, wherein the one or more main air preheaters each comprise a steam inlet fluidly connected to one or more steam outlets of said one or more energy turbines or to the high pressure steam outlet of the boiler;
∘ an additional air preheater configured for preheating said stream of combustion air, wherein said additional air preheater is positioned in series upstream of said one or more main air preheaters, and wherein said additional air preheater comprises a condensate inlet fluidly connected to a condensate outlet of a CC system.

11. The integrated system according to claim 10, wherein said boiler comprises a flue gas outlet, and wherein the system comprises further:
∘ a capturing unit configured to capture CO2 from a CO2-containing source, the capturing unit comprising a flue gas inlet fluidly connected to said flue gas outlet of the boiler, a capturing medium inlet and a capturing medium outlet, and
∘ a regeneration unit comprising a capturing medium inlet in fluid connection with the capturing medium outlet of the capturing unit, a steam inlet to receive steam as a heat source, and a condensate outlet to discharge formed CC condensate, wherein said condensate outlet is in fluid connection with the condensate inlet of the additional air preheater.

12. The integrated system according to claim 11, wherein the steam inlet of the regeneration unit is in fluid connection with one or more of the steam outlets of the one or more energy turbines, preferably with a low-pressure steam outlet or a medium-pressure steam outlet.

13. The integrated system according to any one of claims 10-12, wherein the system comprises a medium-pressure main air preheater, a low-pressure main air preheater, and optionally a high-pressure main air preheater, wherein the main air preheaters are arranged such that said combustion air passes through said additional air preheater, said low-pressure main air preheater, said medium-pressure heater, and optionally said high-pressure heater, in series.

14. The integrated system according to any one of claims 10-13, wherein said additional air preheater, and said main air preheaters are tube bundle heat exchangers.

15. The integrated system according to any one of claims 10-14, further comprising:
∘ a WtE condenser fluidly connected to said turbine exhaust outlet configured to further condense said turbine exhaust,
∘ a steam ejector fluidly connected to the high-pressure steam outlet of the boiler and to the WtE condenser,
∘ an ejector heat exchanger fluidly connected to the condensate outlet of the WtE condenser and to the ejector steam outlet of the steam ejector, configured for heating the WtE condensate with said ejector steam,
∘ optionally, a low-low-pressure heat exchanger fluidly connected to a condensate outlet of said ejector heat exchanger, and further comprising a steam inlet fluidly connected to a steam outlet of said energy turbine, such that said low-low-pressure heat exchanger is configured to preheat said WtE condensate with a low-low-pressure steam fraction from said energy turbine;
∘ a tie-in point where the outlet of said ejector heat exchanger or said low-low-pressure heat exchanger is connected with a condensate outlet of said additional air preheater wherein said WtE condensate is mixed with a CC condensate, forming a CC-WtE condensate;
∘ a flue gas cooler which is fluidly connected to said tie-in point, configure to cool hot flue gas by heat exchange with said CC-WtE condensate.
